(19) **Europäisches Patentamt**

**European Patent Office**

**Office européen des brevets**

(11) Veröffentlichungsnummer: **0 483 491 B1**

(12) **EUROPÄISCHE PATENTSCHRIFT**

(45) Veröffentlichungstag der Patentschrift: **05.07.95**

(51) Int. Cl.6: **G01N 9/24**, G01N 29/02

(21) Anmeldenummer: **91115032.4**

(22) Anmeldetag: **05.09.91**

(54) **Ultraschall (US)-Dichtemesser zum Messen der spezifischen Dichte eines Fluid.**

(30) Priorität: **28.09.90 DE 4030784**

(43) Veröffentlichungstag der Anmeldung:
**06.05.92 Patentblatt 92/19**

(45) Bekanntmachung des Hinweises auf die
Patenterteilung:
**05.07.95 Patentblatt 95/27**

(84) Benannte Vertragsstaaten:
**CH DE ES FR GB IT LI NL**

(56) Entgegenhaltungen:
EP-A- 0 364 168     WO-A-84/04167
WO-A-87/02770     CA-A- 1 203 615
US-A- 3 359 788     US-A- 4 214 484

(73) Patentinhaber: **SIEMENS AKTIENGESELL-
SCHAFT**
**Wittelsbacherplatz 2**
**D-80333 München (DE)**

(72) Erfinder: **Fisher, Bernhard, Dipl.-Phys.**
**Schyrenstrasse 11/2**
**W-8000 München 90 (DE)**
Erfinder: **Mágori, Valentin, Dipl.-Phys.**
**Limburgstrasse 17**
**W-8000 München 90 (DE)**
Erfinder: **von Jena, Alexander, Dr.**
**Oskar-von-Miller-Ring 29**
**W-8000 München 2 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft einen Ultraschall (US)-Dichtemesser zum Messen der spezifischen Dichte eines Fluid, wobei der Dichtemesser als ein an einen Flüssigkeitskanal für die zu bewertende Flüssigkeit angeformter Meßkörper ausgebildet ist.

Die Dichte von Flüssigkeiten läßt sich mit Ultraschall nach dem Prinzip der Frontwellendetektion unter Laborbedingungen auf weniger als ±1 % genau bestimmen. Bei diesem Meßverfahren wird die Reflexion an der Grenzschicht Meßkörper-Fluid gemessen und über eine zusätzliche Messung mit Luft als Kontaktmedium der Reflexionkoeffizient $R := i_{ref}/i_O$ ($i_{ref}$: reflektierte Intensität, $i_O$: emittierte Intensität) bestimmt. Da die Reflexivität R bei senkrechtem Einfall nur von den Größen "Dichte" und "Schallgeschwindigkeiten" abhängt, kann bei bekannten Materialparametern des Meßkörpers die Dichte des Fluid berechnet werden. Die Voraussetzung des senkrechten Einfalls ist nur bei der ersten Wellenfront weitgehend erfüllt. Zur Messung wird daher nur eine führende Halbschwingung herangezogen.

Für die Messung von $i_O$ kommt für den praktischen Einsatz keine Hilfsmessung in Frage. Andererseits ist die begleitende Messung von $i_O$ notwendig, um Änderungen der Ultraschall-Abstrahlung z.B. durch Temperatureinflüsse, Luftfeuchte, Alterung oder Depolarisation der Piezokeramik kompensieren zu können. Die deshalb notwendige Online-Referenzmessung kann z.B. über eine Inhomogenität in dem Vollmaterial zwischen Piezoscheibe und Fluid erfolgen. Wird als Vollmaterial Edelstahl verwendet, wie es für die industrielle Durchflußmessung vorgeschrieben ist, so entstehen unabhängig vom Prinzip der Zusatzreflexion vagabundierende Echos, die für einige Zeit stören können. Das Ziel muß daher sein, die Amplitude, die Anzahl und die zeitliche Ausdehnung vagabundierender Impulse möglichst klein zu halten.

Die Geometrie des Meßkörpers hat einen großen Einfluß darauf, wie sich die Sendeenergie auf das auszuwertende führende Echo und die störenden vagabundierenden Echos verteilt. Hierzu wurden bereits Körper mit verschiedenen Quer- und Längsschnitten untersucht. Die beste bisher gefundene Geometrie stellt eine Kegelstumpfform dar. Der Unterschied z.B. im Vergleich zu einer Zylindergestalt ist beträchtlich. Der erste abgesetzte Impuls ist bei einem Zylinder nicht einmal derjenige mit der größten Amplitude. Zudem sind die vagabundierenden Echos deutlich ausgeprägt. Beim Kegelstumpf dagegen zeigt der führende Impuls keine Substruktur. Allerdings ist bei Edelstahl trotzdem noch ein Einfluß der vagabundierenden Echos nachweisbar. Die notwendige Genauigkeit der Amplitudenmessung für die Dichtemessung liegt bei ca. 0.1%, so daß auch vagabundierende Echos im Promillebereich die Dichtemessung stören. Da es trotz der erreichten Verbesserungen nicht möglich ist, durch eine vergrößerte Meßkörperlänge die Laufzeiten der Primärsignale in die Größenordnung der Abklingzeiten von mehrfach reflektiertem Schall zu bringen, müssen die Impulszüge der Referenz- und der Kontaktmessung zeitlich ineinander geschachtelt werden.

Für eine Referenzmessung muß gefordert werden, daß die Änderung der Reflektivität des Hilfsreflektors unter sämtlichen Betriebsbedingungen kleiner ist als 0.1 %. Da der Übergang Meßkörper - Luft hierfür die besten Voraussetzungen bietet, kommt technisch eine partielle Reflexion an einer konstruktiv eingefügten Inhomogenität mit Luftkontakt in Frage. Mögliche Ausführungsformen hierfür sind z.B. eine äußere Ringnut oder eine Bohrung mit zylindrischem oder rechteckigem Querschnitt. Form und räumliche Ausdehnung derartiger Partialreflektoren sind so zu wählen, daß die Amplituden von Referenz- und Meßimpuls bei einer Messung an Luft in einem für die Störunterdrückung und die Auswertbarkeit günstigen Verhältnis stehen.

Vorteile dieses Vorgehens sind die unveränderte Bauhöhe des nur in Kontur oder Querschnitt veränderten Meßkörpers und die von den Betriebsbedingungen in hohem Maße unabhängige Reflektivität des Partialreflektors. Kritisch erscheint hingegen die Abhängigkeit des Referenzsignals von der örtlichen Verteilung der auf den räumlich eng lokalisierten Hilfsreflektor auffallenden Intensität. Da die Amplitudenmessung einen gewissen Mindestpegel verlangt, muß das empfangene Signal zumindest mit einigen Zyklen eingeschwungen sein. Wellenlängenabhängige Interferenzerscheinungen im Nahfeld können daher zu lokalen Intensitätsveränderungen führen, die das Referenzsignal verfälschen. Hierbei besteht der Zusammenhang einer um ca. 20 dB verstärkten Wirkung von Amplitudenfehlern auf die Genauigkeit der Dichtmessung.

Der vorliegenden Erfindung liegt die Aufgabe zugrunde, einen Ultraschall-Dichtemesser zu schaffen, der bei einfachem und kompaktem Aufbau eine drift-, temperatur- und materialalterungsunabhängige zuverlässige Dichtemessung eines Fluid gestattet.

Zur Lösung dieser Aufgabe wird ein Ultraschall-Dichtemesser der eingangs genannten Art vorgeschlagen, wobei erfindungsgemäß vorgesehen ist, daß der Meßkörper einen einzigen Ultraschallwellen-Sende/Empfangswandler in Form einer Piezoscheibe enthält, der zur Erzeugung einer Ultraschallwellenkeule, die auf die Oberfläche des zu messenden Fluid und auf eine Referenzgrenzschicht gerichtet ist, und zum Empfangen sowohl eines Referenzechos als auch eines Nutzechos dient, daß der Meßkörper im wesentlichen kegelstumpfförmig ist, wobei die Piezoscheibe an einer ersten, vorzugsweise senkrecht zur Rotationsachse des Meßkörpers liegenden Kegelschnittfläche kleinen Durchmessers des Meßkörpers angeordnet ist und eine zweite, vorzugsweise senkrecht zur Rotationsachse des Meßkörpers liegende zweite Kegelschnitfläche großen Durchmessers auf das zu bewertende Fluid gerichtet ist, daß der Meßkörper senkrecht zu seiner Rotationsachse geteilt ist, wobei der der Piezoscheibe zugewandte erste Teil einer ersten Länge des Meßkörpers aus einem ersten Material und der dem Fluid zugewandte zweite Teil einer zweiten Länge des Meßkörpers aus einem zweiten Material besteht und wobei die Grenzschicht zwischen dem ersten Material und dem zweiten Material zur Erzeugung von Referenzechos dient, und daß das Verhältnis der Längen so gewählt ist, daß die Referenzechos und die Nutzechos derart zeitlich getrennt auf die Oberfläche der Piezoscheibe treffen, daß sie für einen Auswertevorgang unterscheidbar sind.

Vorteilhafte Weiterbildungen der Erfindung sind durch die in den Unteransprüchen angebenen Merkmale gekennzeichnet.

Im folgenden wird die Erfindung anhand einer Figur im einzelnen beschrieben.

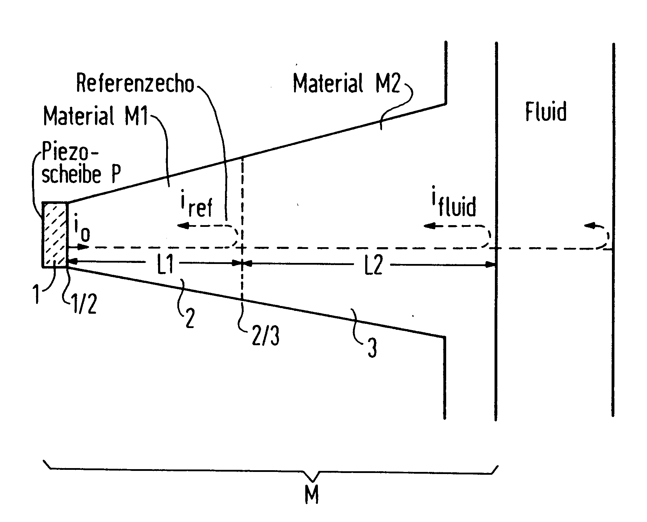

Die Figur zeigt einen Ultraschall (US)-Dichtemesser zum Messen der spezifischen Dichte eines Fluid, wobei der Dichtemesser als ein an einen Flüssigkeitskanal für die zu bewertende Flüssigkeit angeformter Meßkörper ausgebildet ist. Der Meßkörper M enthält einen einzigen Ultraschallwellen-Sende/Empfangswandler in Form einer Piezoscheibe 1, der zur Erzeugung einer Ultraschallwellenkeule, die auf die Oberfläche des zu messenden Fluid und auf eine Referenzgrenzschicht gerichtet ist, und zum Empfangen sowohl eines Referenzechos als auch eines Nutzechos dient. Der Meßkörper M ist im wesentlichen kegelstumpfförmig, wobei die Piezoscheibe 1 an einer ersten, vorzugsweise senkrecht zur Rotationsachse des Meßkörpers M liegenden Kegelschnittfläche 1/2 kleinen Durchmessers des Meßkörpers M angeordnet ist und eine zweite, vorzugsweise senkrecht zur Rotationsachse des Meßkörpers M liegende zweite Kegelschnittfläche 4 großen Durchmessers auf das zu bewertende Fluid gerichtet ist. Der Meßkörper M ist senkrecht zu seiner Rotationsachse geteilt, wobei der der Piezoscheibe 1 zugewandte erste Teil 2 einer ersten Länge L1 des Meßkörpers M aus einem ersten Material M1 und der dem Fluid zugewandte zweite Teil 3 einer zweiten Länge L2 des Meßkörpers M aus einem zweiten Maerial M2 besteht. Die Grenzschicht 2/3 zwischen dem ersten Material M1 und dem zweiten Material M2 dient zur Erzeugung von Referenzechos $i_{ref}$. Das Verhältnis der Längen L1, L2 ist so gewählt, daß die Referenzechos $i_{ref}$ und die Nutzechos $i_{fluid}$ derart zeitlich getrennt auf die Oberfläche der Piezoscheibe 1 treffen, daß sie für einen Auswertevorgang unterscheidbar sind.

Bei der Anordnung P-M1-M2 wird nur in eine Richtung abgestrahlt. Die Grenzschicht M1/M2 liefert das Referenzecho, die Grenze M2/Fluid des Kontaktecho. Dabei kann M1 aus dämpfendem Material bestehen, so daß vagabundierende Echos unterdrückt werden. Der Vorteil dieser Anordnung ist, daß sich außer den Abstrahleigenschaften der Piezoscheibe auch der Übergang P/M1 beliebig ändern darf, ohne die Messung zu verfälschen. Außerdem wird ein so konstruierter Sensor kurz und leicht, da die ganze Länge von M1 bereits als Vorlauf für das Kontaktecho wirkt. Im obigen Beispiel wäre in M2 (Edelstahlausführung) nur noch eine zusätzliche Laufzeit von 15 $\mu$s zu realisieren. Diese entspricht einem Weg von 43.5 mm Länge. Der ganze Sensor wäre also nur noch ca. 75 mm lang.

Das erste Material M1 besteht aus einem dämpfenden Material, und das zweite Material M2 besteht aus einem Material mit einem hohen Schallübertragungswert.

Das erste Material M1 kann beispielsweise aus PVC oder Plexiglas bestehen. Das zweite Material M2 besteht vorzugsweise aus Edelstahl.

Die Kegelstumpfgeometrie des Meßkörpers M ist im Hinblick auf eine minimale Störechoerzeugung ausgelegt. Die drei Elemente des Meßkörpers M, nämlich die Piezoscheibe 1, der erste Teil 2 und der zweite Teil 3 sind vorzugsweise jeweils miteinander mittels eines Industrieklebers verbunden.

**Patentansprüche**

1. Ultraschall (US)-Dichtemesser zum Messen der spezifischen Dichte eines Fluid, wobei der Dichtemesser als ein an einen Flüssigkeitskanal für die zu bewertende Flüssigkeit angeformter Meßkörper ausgebildet ist, wobei weiter vorgesehen ist, daß der Meßkörper (M) einen einzigen Ultraschallwellen-Sende/Empfangswandler in Form einer Piezoscheibe (1) enthält, der zur Erzeugung einer Ultraschallwellenkeule, die auf die Oberfläche des zu messenden Fluid und auf eine Referenzgrenzschicht gerichtet ist, und zum Empfangen sowohl eines Referenzechos als auch eines Nutzechos dient, daß der Meßkörper (M) im wesentlichen aus einem kegelstumpfförmigen Gebilde besteht, wobei die Piezoscheibe (1) an einer ersten, vorzugsweise senkrecht zur Rotationsachse des Meßkörpers (M) liegenden Kegelschnittfläche (1/2) kleinen Durchmessers des Meßkörpers (M) angeordnet ist und eine zweite, vorzugsweise senkrecht zur Rotationsachse des Meßkörpers (M) liegende Kegelschnittfläche (4) großen Durchmessers auf das zu bewertende Fluid gerichtet ist, daß der Meßkörper (M) senkrecht zu seiner Rotationsachse geteilt ist, wobei der der Piezoscheibe (1) zugewandte erste Teil (2) einer ersten Länge (L1) des Meßkörpers (M) aus einem ersten Material (M1) und der dem Fluid zugewandte zweite Teil (3) einer zweiten Länge (L2) des Meßkörpers (M) aus einem anderen, zweiten Material (M2) besteht und wobei die Grenzschicht (2/3) zwischen dem ersten Material (M1) und dem zweiten Material (M2) zur Erzeugung von Referenzechos ($i_{ref}$) dient, und daß das Verhältnis der Längen (L1, L2) so gewählt ist, daß die Referenzechos ($i_{ref}$) und die Nutzechos ($i_{fluid}$) derart zeitlich getrennt auf die Oberfläche der Piezoscheibe (1) treffen, daß sie für einen Auswertevorgang unterscheidbar sind.

2. Ultraschall (US)-Dichtemesser nach Anspruch 1, **dadurch gekennzeichnet,** daß das erste Material (M1) aus einem dämpfenden Material und das zweite Material (M2) aus einem Material mit einem hohen Schallübertragungswert besteht.

3. Ultraschall (US)-Dichtemesser nach Anspruch 2, **dadurch gekennzeichnet,** daß das erste Material (M1) aus PVC besteht.

4. Ultraschall (US)-Dichtemesser nach Anspruch 2, **dadurch gekennzeichnet,** daß das erste Material (M1) aus Plexiglas besteht.

5. Ultraschall (US)-Dichtemesser nach Anspruch 3 oder 4, **dadurch gekennzeichnet,** daß das zweite Material (M2) aus Edelstahl besteht.

6. Ultraschall (US)-Dichtemesser nach einem der Ansprüche 1 bis 5, **dadurch gekennzeichnet,** daß die Kegelstumpfgeometrie des Meßkörpers (M) im Hinblick auf eine minimale Störechoerzeugung ausgelegt ist.

7. Ultraschall (US)-Dichtemesser nach einem der Ansprüche 1 bis 5, **dadurch gekennzeichnet,** daß die drei Elemente des Meßkörper (M), nämlich die Piezoscheibe (1), der erste Teil (2) und der zweite Teil (3) jeweils miteinander mittels eines Industrieklebers verbunden sind.

**Claims**

1. Ultrasonic (US) densitometer for measuring the specific density of a fluid, the densitometer being constructed as a measuring member integrally formed on a fluid channel for the fluid to be analysed, it being provided, furthermore, that the measuring member (M) includes a single transmitting/receiving transducer for ultrasonic waves in the form of a piezoelectric disc (1), which transducer serves the purpose of generating a beam of ultrasonic waves which is directed onto the surface of the fluid to be measured and onto a reference boundary layer, and of receiving both a reference echo and a useful echo, that the measuring member (M) essentially comprises a frustoconical structure, the piezoelectric disc (1) being arranged on a first surface (1/2) of a conic section of small diameter of the measuring member (M), which surface is preferably situated perpendicular to the axis of rotation of the measuring member (M), and a second surface (4) of a conic section of large diameter, which surface is preferably situated perpendicular to the axis of rotation of the measuring member (M), being directed onto the fluid to be analysed, that the measuring member (M) is divided perpendicular to its axis of rotation, the first part (2), facing the piezoelectric disc (1), of a first length (L1) of the measuring member (M) comprising a first material (M1) and the second part (3), facing the fluid, of a second length (L2) of the measuring member (M) comprising another, second material (M2), and the boundary layer (2/3) between the first material (M1) and the second material (M2) serving the purpose of generating reference echoes ($i_{ref}$), and that the ratio of the lengths (L1, L2) is selected in such a way that the reference echoes ($i_{ref}$) and the useful echoes ($i_{fluid}$) impinge on the surface of the piezoelectric disc (1) in a temporally separate fashion in such a way that they can be distinguished for an analysing process.

2. Ultrasonic (US) densitometer according to Claim 1, characterized in that the first material (M1) comprises a damping material and the second material (M2) comprises a material having a high sound transmission value.

3. Ultrasonic (US) densitometer according to Claim 2, characterized in that the first material (M1) comprises PVC.

4. Ultrasonic (US) densitometer according to Claim 2, characterized in that the first material (M1) comprises plexiglass.

5. Ultrasonic (US) densitometer according to Claim 3 or 4, characterized in that the second material (M2) comprises stainless steel.

**6.** Ultrasonic (US) densitometer according to one of Claims 1 to 5, characterized in that the frustoconical geometry of the measuring member (M) is designed with regard to a minimum generation of unwanted echo.

**7.** Ultrasonic (US) densitometer according to one of Claims 1 to 5, characterized in that the three elements of the measuring member (M), specifically the piezoelectric disc (1), the first part (2) and the second part (3), are respectively joined to one another by means of an industrial adhesive.

**Revendications**

**1.** Densimètre à ultrasons (US) pour la mesure de la densité spécifique d'un fluide, le densimètre étant réalisé sous la forme d'un corps de mesure conformé dans un canal de passage du liquide à évaluer, et dans lequel il est en outre prévu que le corps de mesure (M) comporte un seul transducteur d'émission/réception d'ondes ultrasonores sous la forme d'un disque piézoélectrique (1), qui sert à produire un lobe d'ondes ultrasonores, qui est dirigé vers la surface du fluide à mesurer et sur la couche limite de référence, et sert à recevoir aussi bien un écho de référence qu'un écho utile, que le corps de mesure (M) est constitué essentiellement par une structure de forme tronconique, le disque piézoélectrique (1) étant disposé sur une première surface de section conique (1/2), qui est de préférence perpendiculaire à l'axe de rotation du corps de mesure (M) de la partie de faible diamètre du corps de mesure (M), et une seconde surface de section conique (4), de préférence perpendiculaire à l'axe de rotation du corps de mesure (M) et possédant un grand diamètre, étant dirigée sur le fluide à évaluer, que le corps de mesure (M) est divisé perpendiculairement à son axe de rotation, la première partie (2), tournée vers le disque piézoélectrique (1) et possédant une première longueur (L1), du corps de mesure (M) étant réalisée en un premier matériau (M1), tandis que la seconde partie (3), tournée vers le fluide et possédant une longueur (L2), du corps de mesure (M) est formée d'un autre second matériau (M2), alors que la couche limite (2/3) entre le premier matériau (M1) et le second matériau (M2) sert à produire des échos de référence ($i_{ref}$), et que le rapport des longueurs (L1,L2) est choisi de telle sorte que les échos de référence ($i_{ref}$) et les échos utiles ($i_{fluide}$) rencontrent séparément dans le temps la surface du disque piézoélectrique (1) de telle sorte qu'ils peuvent être différenciés pour l'opération d'évaluation.

**2.** Densimètre à ultrasons (US) suivant la revendication 1, caractérisé par le fait que le matériau (M1) est un matériau réalisant une atténuation et que le second matériau (M2) est un matériau possédant un coefficient élevé de transmission acoustique.

**3.** Densitomètre à ultrasons (US) suivant la revendication 2, caractérisé par le fait que le premier matériau (M1) est du PCV.

**4.** Densitomètre à ultrasons (US) suivant la revendication 2, caractérisé par le fait que le premier matériau (M1) est du Plexiglas.

**5.** Densitomètre à ultrasons (US) suivant la revendication 3 ou 4, caractérisé par le fait que le second matériau (M2) est de l'acier spécial.

**6.** Densitomètre à ultrasons (US) suivant l'une des revendications 1 à 5, caractérisé par le fait que la géométrie tronconique du corps de mesure (M) est conçue pour fournir une production minimale d'échos parasites.

**7.** Densitomètre à ultrasons (US) suivant l'une des revendications 1 à 5, caractérisé par le fait que les trois éléments du corps de mesure (M), à savoir le disque piézoélectrique (1), la première partie (2) et la seconde partie (3) sont reliés respectivement entre eux au moyen d'une colle industrielle.

Referenzecho

Material M2

Material M1

Fluid

Piezoscheibe P

$i_{ref}$

$i_{fluid}$

$i_0$

L1

L2

1

1/2

2

2/3

3

M